# EUROPÄISCHE PATENTSCHRIFT

(11) **EP 1 090 230 B1**
(45) Veröffentlichungstag und Bekanntmachung des Hinweises auf die Patenterteilung: **02.02.2005**
(21) Anmeldenummer: 00922420.5
(22) Anmeldetag: 04.03.2000
(51) Int. Cl.: F04B 53/12

(54) **KOLBENPUMPE**
PISTON PUMP
POMPE A PISTON

(30) Priorität: 22.04.1999 DE 19918122
(43) Veröffentlichungstag der Anmeldung: 11.04.2001
(73) Patentinhaber: ROBERT BOSCH GMBH, 70442 Stuttgart (DE)
(72) Erfinder: WETZEL, Gerhard, D-70825 Korntal-Muenchingen (DE); SCHULLER, Wolfgang, D-74343 Sachsenheim (DE)
(86) Internationale Anmeldenummer: PCT/DE2000/000704
(87) Internationale Veröffentlichungsnummer: WO 2000/065234

(56) Entgegenhaltungen:
- EP-A- 0 027 717
- EP-A- 0 617 200
- DE-A- 4 407 978
- DE-A- 19 510 745
- DE-A- 19 752 545

## Beschreibung

### Stand der Technik

Die Erfindung betrifft eine Kolbenpumpe für eine Bremsanlage eines Fahrzeugs mit den Merkmalen des Oberbegriffs des Anspruchs 1.

Eine derartige Kolbenpumpe ist beispielsweise bekannt aus der EP 0 027 717 A1. Diese bekannte Kolbenpumpe weist einen zu einer hin- und hergehenden Hubbewegung antreibbaren Kolben auf, der als Hohlkolben ausgebildet ist. Dessen Innenraum bildet einen Verdrängungsraum der Kolbenpumpe. Im Inneren des Kolbens ist ein Ventil untergebracht, das eine Durchflussrichtung von zu förderndem Fluid durch die Kolbenpumpe steuert. Dieses Ventil umfasst unter anderem ein Ventilsitzteil, das ebenfalls im Inneren des Kolbens angebracht ist. Die Stimwand dieses Kolbens ist mit Durchbrüchen versehen, durch die hindurch Fluid in den Verdrängungsraum der Kolbenpumpe strömt. Der Kolbenantrieb erfolgt mittelbar über einen Stößel.

Diese bekannte Kolbenpumpe hat den Nachteil, dass sie groß, insbesondere lang baut und in Folge dessen ein großes Bauvolumen einnimmt.

### Vorteile der Erfindung

Demgegenüber hat eine Kolbenpumpe entsprechend den Merkmalen des Anspruch 1 den Vorteil einer besonders kompakten und bauraumsparenden Bauweise. Die wird erreicht dadurch, dass der Kolben eine geschlossene Kolbenstirnwand aufweist über die ein direkter oder unmittelbarer Antrieb der Kolbenpumpe erfolgt. Zudem ist das Ventilsitzteil topfförmig ausgebildet und an seinem offenen Ende mit einer umlaufenden Dichtung versehen. Dadurch schließt das Ventilsitzteil einen Zwischenraum ab, der über das am Ventilsitzteil ausgebildete Ventil mit dem Verdrängungsraum der Kolbenpumpe kommuniziert. Zudem weist die Kolbenwand einen Fluiddurchlass auf, welcher ebenfalls mit dem Zwischenraum verbunden ist. Durch diese Ausgestaltung der Erfindung ist eine einfache und preisgünstige Gestaltung des Fluideinlasses oder Fluidauslasses möglich.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand zweier bevorzugt ausgewählter, in der Zeichnung dargestellter Ausführungsbeispiele näher erläutert. Es zeigen:
- Figur 1: ein erstes Ausführungsbeispiel einer erfindungsgemäßen Kolbenpumpe im Achsschnitt;
- Figur 2: ein zweites Ausführungsbeispiel einer erfindungsgemäßen Kolbenpumpe im Achsschnitt; und
- Figuren 3 und 4: Einzelheitdarstellungen zweier abgewandelter Ausgestaltungen der Kolbenpumpe aus Figur 2 gemäß der Erfindung.

### Beschreibung des ersten Ausführungsbeispiels

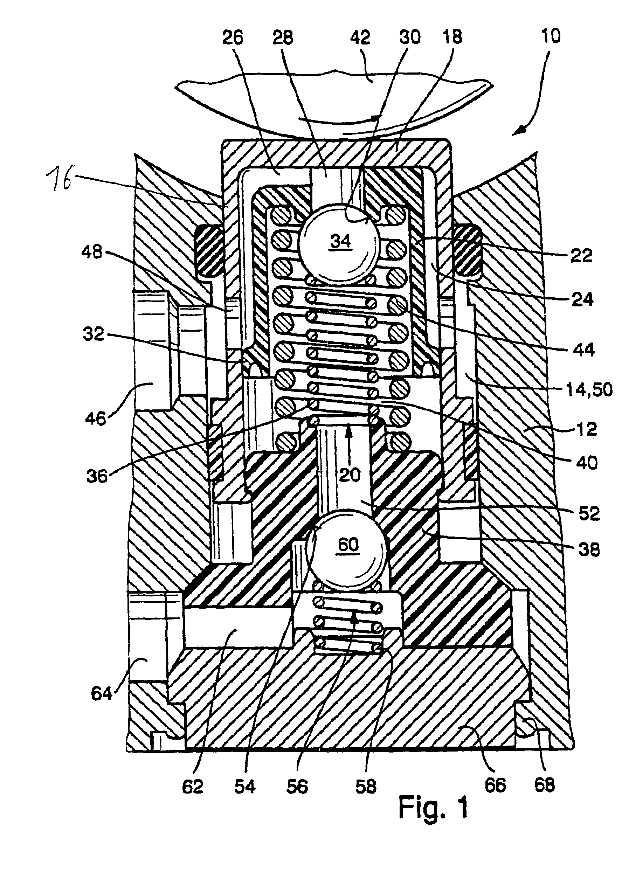

Die in Figur 1 dargestellte, erfindungsgemäße Kolbenpumpe 10 ist in einen Hydraulikblock 12 eingesetzt, der ein Pumpengehäuse bildet und nachfolgend als solches bezeichnet wird. Vom Hydraulikblock 12 ist in der Zeichnung der klaren Darstellung wegen lediglich ein die Kolbenpumpe 10 umgebendes Bruchstück dargestellt. Der Hydraulikblock 12 ist Teil einer hydraulischen Bremsdrucksteuerschaltung einer schlupfgeregelten Fahrzeugbremsanlage. In den Hydraulikblock 12 sind außer der Kolbenpumpe 10 weitere hydraulische, nicht dargestellte Bauelemente wie beispielsweise Magnetventile eingesetzt und miteinander und mit der Kolbenpumpe 10 verschaltet.

In dem das Pumpengehäuse bildenden Hydraulikblock 12 ist eine gestufte Pumpenbohrung 14 angebracht, in der ein Kolben 16 axial verschieblich aufgenommen ist. Der Kolben 16 ist als Hohlkolben ausgebildet, er ist rohrförmig und mit einer mit dem Kolben 16 einstückigen Kolbenstirnwand 18, die den Kolben 16 an einer Stirnseite verschließt. Die andere Stirnseite des Kolbens 16 ist offen. Der Kolben 16 ist durch Umformen, beispielsweise durch Kaltschlagen, Fließpressen oder Tiefziehen hergestellt.

In einem Innenraum des Kolbens 16 ist ein Einlaßventil 20 der Kolbenpumpe 10 untergebracht. Das Einlaßventil 20 ist als federbelastetes Rückschlagventil ausgebildet. Das Einlaßventil 20 weist ein topfförmiges Ventilsitzteil 22 auf, das mit einer geschlossenen Seite an einer Innenseite der Kolbenstirnwand 18 anliegend in den Kolben 16 eingesetzt ist. Das Ventilsitzteil 22 weist einen kleineren Außendurchmesser als ein Innendurchmesser des Kolbens 16 auf, so daß ein ringförmiger Zwischenraum (Ringraum) 24 zwischen dem Ventilsitzteil 22 und dem Kolben 16 besteht. An einer Stirnfläche ist das Ventilsitzteil 22 mit drei sternförmig verlaufenden Nuten versehen, die zusammen mit der Kolbenstirnwand 18 Fluidkanäle 26 bilden, die mit dem Ringraum 24 kommunizieren. Die Fluidkanäle 26 münden in ein axiales Mittelloch 28 im Ventilsitzteil 22, wobei eine Mündung des Mittellochs 28 im Innern des Ventilsitzteils 22 als konischer Ventilsitz 30 des Einlaßventils 20 der Kolbenpumpe 10 ausgebildet ist. An einer offenen Stirnseite weist das Ventilsitzteil 22 eine nach Außen abstehende umlaufende Dichtlippe 32 auf, mit der es abdichtend innen am Kolben 16 anliegt. Die Dichltippe 32 schließt den Ringraum 24 an der offenen Seite des Ventilsitzteils 22 ab. Das Einlaßventil 20 weist eine Ventilkugel 34 als Ventilschließkörper auf, die von einer Schraubendruckfeder als Ventilschließfeder 36 gegen den Ventilsitz 30 gedrückt wird.

Die Ventilschließfeder 36 stützt sich an einem Auslaßventilteil 38 ab, welches zapfenförmig einem radial abstehenden Ringbund an einem Ende ausgebildet ist. Das Auslaßventilteil 38 ist feststehend in der Pumpenbohrung 14 angebracht, es ragt in den Innenraum des Kolbens 16 hinein. Der Innenraum des Kolbens 16, der an der offenen Stirnseite des Kolbens 16 von dem in den Kolben 16 hineinragenden Außlaßventilteil 38 begrenzt wird, bildet einen Verdrängungsraum 40 der Kolbenpumpe 10.

Ein Fluideinlaß in den Verdrängungsraum 40 der Kolbenpumpe 10 erfolgt durch eine Einlaßbohrung 46, die radial in die Pumpenbohrung 14 mündend im Pumpengehäuse 12 angebracht ist. Durch die Einlaßbohrung 46 einströmendes Fluid gelangt durch die Pumpenbohrung 14 und Fluiddurchlässe 48, die in einer Kolbenumfangswand angebracht sind, in den Ringraum 24 zwischen den Kolben 16 und dem Ventilsitzteil 22 des Einlaßventils 20. Aus dem Ringraum 24 strömt das Fluid durch die Fluidkanäle 26 im Bereich der Kolbenstirnwand 18 in das Mittelloch 28 des Ventilsitzteils 22 und durch das Einlaßventil 20 in den Verdrängungsraum 40.

Zum Antrieb des Kolbens 16 zu einer in der Pumpenbohrung 14 axial hin- und hergehenden Hubbewegung weist die Kolbenpumpe 10 einen elektromotorisch rotierend antreibbaren Exzenter 42 auf, an dessen Umfang der Kolben 16 mit der Kolbenstirnwand 18 anliegt. Eine Kolbenrückstellfeder 44 in Form einer Schraubendruckfeder, die in den Verdrängungsraum 40 eingesetzt ist, drückt den Kolben 16 gegen den Umfang des Exzenters 42 und hält dadurch den Kolben 16 in Anlage am Exzenter 42. Die Kolbenrückstellfeder 44 liegt im Ventilsitzteil 22 ein, sie hält das Ventilsitzteil 22 an der Kolbenstirnwand 18 und drückt über das Ventilsitzteil 22 den Kolben 16 gegen den Exzenter 42. Die Kolbenrückstellfeder 44 stützt sich an dem in der Pumpenbohrung 14 festen Auslaßventilteil 38 ab. Durch die hin- und hergehende Hubbewegung des Kolbens 16 vergrößert und verkleinert sich ein Volumen des Verdrängungsraums 40, wodurch in an sich bekannter Weise Fluid mit der Kolbenpumpe 10 gefördert wird.

Der Kolben 16 ist als Stufenkolben ausgebildet, d. h. er ist im Bereich seiner offenen Stirnseite auf einem größeren Durchmesser in der Pumpenbohrung 14 abgedichtet als an seiner geschlossenen Stirnseite. Durch die Ausbildung als Stufenkolben ergibt sich ein den Kolben 16 umgebender Ringraum 50 in der Pumpenbohrung 14, dessen Volumen sich bei der Hubbewegung des Kolbens 16 ändert. Das Volumen des Ringraums 50 vergrößert sich während eines Förderhubs des Kolbens 16, während dem sich das Volumen des Verdrängungsraums 40 verkleinert, so daß im Verdrängungsraum 40 enthaltenes Fluid verdrängt und auf diese Weise gefördert wird.

Die Vergrößerung des den Kolben 16 umgebenden Ringraums 50 bewirkt ein Ansaugen von Fluid durch die Einlaßbohrung 46. Beim Rückhub des Kolbens 16 verkleinert sich das Volumen des Ringraums 50, zugleich vergrößert sich das Volumen des Verdrängungsraums 40, wobei die Volumenzunahme des Verdrängungsraums 40 größer als diejenige des Ringraums 50 ist. Es wird deswegen auch während des Rückhubs des Kolbens 16 Fluid durch die Einlaßbohrung 46 angesaugt, das durch das beim Rückhub geöffnete Einlaßventil 20 in den Verdrängungsraum 40 strömt. Die Ausbildung des Kolbens 16 als Stufenkolben bewirkt eine Ansaugung von Fluid durch die Einlaßbohrung 46 sowohl während des Förder- als auch während des Rückhubs des Kolbens 16, die Ansaugung der Kolbenpumpe 10 wird gleichmäßiger, eine Füllung des Verdrängungsraums 40 und ein Wirkungsgrad der Kolbenpumpe 10 verbessern sich.

Der Fluidauslaß aus dem Verdrängungsraum 40 geht durch ein axiales Durchgangsloch 52 im Auslaßventilteil 38 hindurch. Das Durchgangsloch 52 erweitert sich mit einer konischen Ringstufe 54, die einen Ventilsitz eines Auslaßventils 56 der Kolbenpumpe 10 bildet. Das Auslaßventil 56 ist als federbeaufschlagtes Rückschlagventil ausgebildet. Es weist eine Schraubendruckfeder als Ventilschließfeder 58 auf, die eine Ventilkugel 60 als Ventilschließkörper gegen den Ventilsitz 54 drückt. Aus dem Durchgangsloch 52 strömt aus dem Verdrängungsraum 40 verdrängtes Fluid durch drei sternförmig im Auslaßventilteil 38 angebrachte Radialkanäle 62 in eine Auslaßbohrung 64, die radial zur Pumpenbohrung 14 im Pumpengehäuse 12 angebracht ist.

Die Pumpenbohrung 14 ist auf einer dem Exzenter 42 abgewandten Seite mit einem scheibenförmigen Verschlußteil 66 verschlossen, das durch eine umlaufende Verstemmung 68 des Pumpengehäuses 12 druckdicht in der Pumpenbohrung 14 gehalten ist und das das Auslaßventilteil 38 ortsfest in der Pumpenbohrung 14 hält.

### Beschreibung des zweiten Ausführungsbeispiels

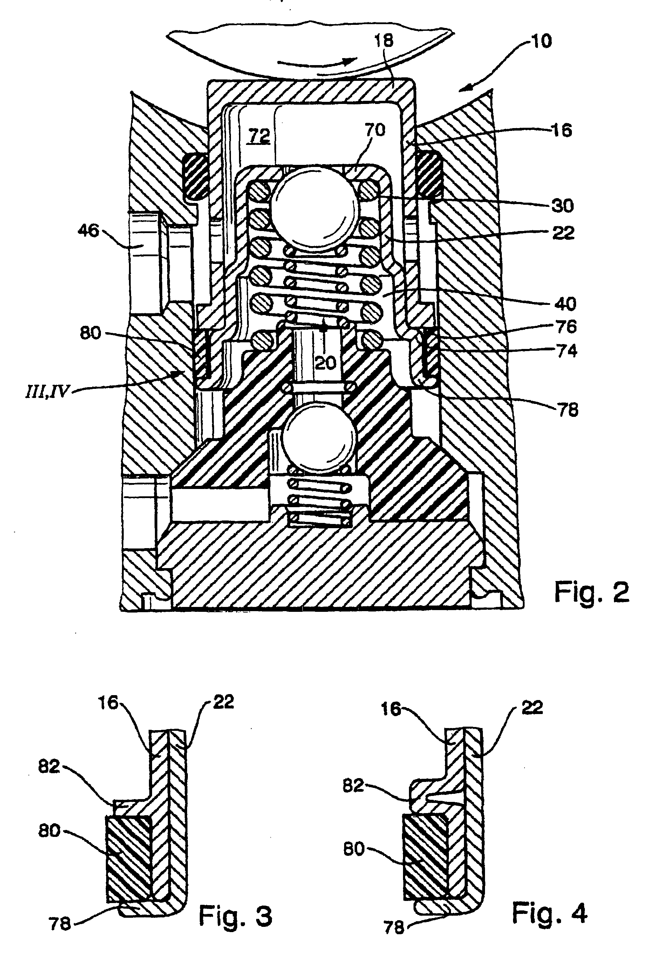

Zur Vermeidung von Wiederholungen wird nachfolgend zu Figur 2 im wesentlichen nur auf die Unterschiede zu Figur 1 eingegangen und im übrigen wird auf die vorausgegangenen Ausführungen zu Figur 1 verwiesen, gleiche Bauteile sind mit gleichen Bezugszeichen versehen.

Bei der in Figur 2 dargestellten, erfindungsgemäßen Kolbenpumpe 10 ist das Ventilsitzteil 22 des Einlaßventils 20 durch Umformen, beispielsweise durch Kaltschlagen, Fließpressen oder Tiefziehen hergestellt. Das Ventilsitzteil 22 ist topfförmig und weist Durchmesserstufungen auf. Es ist in die offene Stirnseite des als Hohlkörper ausgebildeten Kolbens 16 eingepreßt. Der Ventilsitz 30 des Einlaßventils 20 ist geprägt, seine Verschleißfestigkeit ist dadurch erhöht.

Zwischen einer Stirnwand 70 des Ventilsitzteils 22 und der Kolbenstirnwand 18 besteht ein Zwischenraum, der außer seiner Funktion der Fluidleitung von der Einlaßbohrung 46 zum Einlaßventil 20 als Dämpferkammer 72 wirkt. Die Dämpferkammer 72 dämpft Druckpulsationen, die aufgrund der oszillierenden Körperweise der Kolbenpumpe 10 entstehen, und er baut Druckspitzen ab. Die Dämpferkammer 72 verbessert die Füllung des Verdrängungsraums 40 und erhöht den Wirkungsgrad der Kolbenpumpe 10. In die Dämpferkammer 72 kann ein nicht dargestellter, an sich bekannter Dämpferkörper aus einem elastischen Material eingesetzt sein.

Eine Einpreßtiefe des Ventilteils 22 in den Kolben 16 ist durch eine Ringstufe 74 des Ventilsitzteils 22 begrenzt, mit der das Ventilsitzteil 22 an einer Kolbenstirnringfläche 76 an der offenen Seite des Kolbens 16 anliegt. Die Kolbenstirnringfläche 76 steht radial über die Ringstufe 74 nach Außen vor. Das Ventilsitzteil 22 steht axial aus dem Kolben 16 vor und endet mit axialem Abstand von der Kolbenstirnringfläche 76 mit einem nach außen stehenden Flansch 78. Der Flansch 78 bildet eine Flanke einer umlaufenden Nut, die axial von der Kolbenstirnringfläche 76 und vom Flansch 78 begrenzt und deren Grund von dem axial aus dem Kolben 16 vorstehenden Abschnitt des Ventilsitzteils 22 gebildet ist. In dieser Nut liegt ein Dicht- und Führungsring 80 mit rechteckförmigen Ringquerschnitt ein. Der Dicht- und Führungsring 80 wird vor dem Einpressen des Ventilsitzteils 22 in den Kolben 16 auf das Ventilsitzteil 22 aufgesetzt, der Dicht- und Führungsring 80 wird deswegen bei seiner Anbringung am Kolben 16 nicht gedehnt.

Figuren 3 und 4 zeigen zwei weitere Ausgestaltungsmöglichkeiten der Nut für den Dicht- und Führungsring 80. In beiden Fällen ist der Dicht- und Führungsring 80 auf das freie Ende der Kolbenumfangswand des Kolbens 16 aufgesetzt und wird vom Flansch 78 des Ventilsitzteils 22 axial gehalten. Das Ventilsitztteil 22 liegt bei den Ausgestaltungen in Figuren 3 und 4 mit seinem Flansch 78 und nicht der Ringstufe 74 am freien Stirnende des Kolbens 16 an. Der Kolben 16 weist mit Abstand an seinem freien Ende einen nach außen stehenden Bund 82 auf, der den Dicht- und Führungsring 80 axial hält. Der Bund 82 ist bei dem in Figur 3 dargestellten Ausführungsbeispiel der Erfindung spanend durch Drehen und in Figur 4 durch eine umlaufende Falzung die durch eine Stauchung des Kolbens 16 hergestellt ist, gehalten.

## Patentansprüche

1. Kolbenpumpe für eine Bremsanlage eines Fahrzeugs mit einem zu einer hin- und hergehenden Hubbewegung antreibbaren Kolben,
wobei der Kolben (16) als Hohlkolben ausgebildet ist, dessen Innenraum einen Verdrängungsraum (40) der Kolbenpumpe bildet,
wobei im Kolben (16) ein Ventil (20) untergebracht ist, das eine Durchflussrichtung von zu förderndem Fluid durch die Kolbenpumpe (10) steuert,
wobei ein Ventilsitzteil (22) des Ventils (20) im Kolben (16) angebracht ist,
**dadurch gekennzeichnet,**
**dass** der Kolben (16) an seinem einen Ende eine Kolbenstirnwand (18) aufweist, die den Kolben (16) verschließt und über die der Antrieb des Kolbens (16) unmittelbar erfolgt,
**dass** das Ventilsitzteil (22) topfförmig ist
und an seiner offenen Seite eine nach außen abstehende umlaufende Dichtung (32, 80) aufweist,
die einen zwischen dem Ventilsitzteil (22) und dem Kolben (16) bestehenden Raum (24; 72), der mit einem Fluiddurchlaß (48) in der Kolbenwand und über das Ventil (20) mit dem Verdrängungsraum (40) kommuniziert, abschließt.

2. Kolbenpumpe nach Anspruch 1, **dadurch gekennzeichnet, dass** das Ventil (20) als Rückschlagventil ausgebildet ist.

3. Kolbenpumpe nach Anspruch 1, **dadurch gekennzeichnet, dass** der Kolben (16) als Stufenkolben ausgebildet ist.

4. Kolbenpumpe nach Anspruch 1, **dadurch gekennzeichnet, dass** der Kolben (16) ein Umformteil ist.

5. Kolbenpumpe nach Anspruch 1, **dadurch gekennzeichnet, dass** das Ventilsitzteil (22) ein Umformteil ist.

6. Kolbenpumpe nach Anspruch 1, **dadurch gekennzeichnet, dass** das Ventilsitzteil (22) in axialem Abstand zu einer Kolbenstirnringfläche (76) eine Flanke (78) aufweist, so dass eine umlaufende Nut am Kolben (16) gebildet ist, in der ein Dicht- und/oder Führungsring (80) einliegt.

## Claims

1. Piston pump for a brake system of a vehicle, with a piston driveable in a to-and-fro lifting movement, the piston (16) being designed as a hollow piston, the inner space of which forms a displacement space (40) of the piston pump, the piston (16) accommodating a valve (20) which controls a throughflow direction through the piston pump (10) of fluid to be conveyed, a valve-seat part (22) of the valve (20) being mounted in the piston (16), **characterized in that** the piston (16), at one end, has a piston end wall (18) which closes the piston (16) and via which the drive of the piston (16) takes place directly, and **in that** the valve-seat part (22) is pot-shaped and on its open side has an outwardly projecting peripheral seal (32, 80) which closes off a space (24; 72) which is present between the valve-seat part (22) and the piston (16) and which communicates with a fluid passage (48) in the piston wall and, via the valve (20), with the displacement space (40).

2. Piston pump according to Claim 1, **characterized in that** the valve (20) is designed as a non-return valve.

3. Piston pump according to Claim 1, **characterized in that** the piston (16) is designed as a stepped piston.

4. Piston pump according to Claim 1, **characterized in that** the piston (16) is a formed part.

5. Piston pump according to Claim 1, **characterized in that** the valve-seat part (22) is a formed part.

6. Piston pump according to Claim 1, **characterized in that** the valve-seat part (22) has a flank (78) at an axial distance from an annular piston end face (76), so as to form, on the piston (16), a peripheral groove in which a sealing and/or guide ring (80) is seated.

## Revendications

1. Pompe à piston pour un système de freinage d'un véhicule comprenant un piston pouvant être entraîné pour exécuter une course de va-et-vient,
le piston (16) présentant la forme d'un piston creux dont l'intérieur forme une chambre de déplacement (40) de la pompe à piston,
dans le piston (16) une soupape (20) étant logée qui commande un sens d'écoulement d'un fluide à transporter à travers la pompe à piston (10),
un élément de siège de soupape (22) de la soupape (20) étant disposé dans le piston (16),
**caractérisée en ce que**
le piston (16), à l'une de ses extrémités, présente une paroi frontale (18) qui ferme le piston (16) et par laquelle l'entraînement du piston (16) s'effectue directement,
l'élément de siège de soupape (22) présente la forme d'un pot et sur sa face ouverte une garniture circulaire d'étanchéité (32, 80) saillant vers l'extérieur, ferme un espace (24 ; 72), entre l'élément de siège de soupape (22) et le piston (16), qui communique avec un passage de fluide (48) dans la paroi de piston et, par l'intermédiaire de la soupape (20), avec la chambre de déplacement (40).

2. Pompe à piston selon la revendication 1,
**caractérisée en ce que**
la soupape (20) présente la forme d'un clapet anti-retour.

3. Pompe à piston selon la revendication 1,
**caractérisée en ce que**
le piston (16) présente la forme d'un piston étagé.

4. Pompe à piston selon la revendication 1,
**caractérisée en ce que**
le piston (16) est une pièce moulée.

5. Pompe à piston selon la revendication 1,
**caractérisée en ce que**
l'élément de siège de soupape (22) est une pièce de déformation.

6. Pompe à piston selon la revendication 1,
**caractérisée en ce que**
l'élément de siège de soupape (22) présente un flanc (78), à une distance axiale par rapport à une surface annulaire frontale de piston (76), de telle sorte qu'une rainure circulaire est formée sur le piston (16) dans laquelle une bague d'étanchéité et/ou de guidage (80) est insérée.
